# EUROPÄISCHE PATENTSCHRIFT

(11) **EP 2 922 716 B1**
(45) Veröffentlichungstag und Bekanntmachung des Hinweises auf die Patenterteilung: **08.01.2020**
(21) Anmeldenummer: 13791815.7
(22) Anmeldetag: 15.11.2013
(51) Int. Cl.: B60H 1/00, B60H 1/22

(54) **VERFAHREN ZUM ANZEIGEN DES ZUSTANDS EINER HEIZ- ODER KLIMATISIERUNGSEINRICHTUNG EINES FAHRZEUGS UND HEIZ- ODER KLIMATISIERUNGSEINRICHTUNG FÜR EIN FAHRZEUG**
METHOD FOR DISPLAYING THE STATUS OF A HEATING OR AIR CONDITIONING DEVICE OF A VEHICLE AND HEATING OR AIR CONDITIONING DEVICE FOR A VEHICLE
PROCÉDÉ D'AFFICHAGE DE L'ÉTAT D'UN DISPOSITIF DE CHAUFFAGE OU DE CLIMATISATION D'UN VÉHICULE ET DISPOSITIF DE CHAUFFAGE OU DE CLIMATISATION POUR UN VÉHICULE

(30) Priorität: 20.11.2012 DE 102012022590
(43) Veröffentlichungstag der Anmeldung: 30.09.2015
(73) Patentinhaber: Volkswagen Aktiengesellschaft, 38440 Wolfsburg (DE)
(72) Erfinder: MISSALL, Markus, 38102 Braunschweig (DE); SCHMIDTKE, Stefan, 38442 Wolfsburg (DE)
(86) Internationale Anmeldenummer: PCT/EP2013/073932
(87) Internationale Veröffentlichungsnummer: WO 2014/079778

(56) Entgegenhaltungen:
- DE-A1- 19 941 948
- DE-A1-102008 017 051
- DE-A1-102011 112 680
- JP-A- S5 495 430

## Beschreibung

Die vorliegende Erfindung betrifft ein Verfahren zum Anzeigen des Zustands einer Heiz- oder Klimatisierungseinrichtung eines Fahrzeugs. Dabei wird von einer Anzeigevorrichtung des Fahrzeugs ein graphisches Objekt angezeigt, welches das Fahrzeug darstellt. Ferner wird der Zustand der Heiz- oder Klimatisierungseinrichtung erfasst und verschiedene Zustände der Heiz- oder Klimatisierungseinrichtung werden von der Anzeigevorrichtung durch unterschiedliche Darstellungen von Fahrzeugflächen des dargestellten Fahrzeuges angezeigt. Ferner betrifft die Erfindung eine Heiz- oder Klimatisierungseinrichtung für ein Fahrzeug mit einer Steuervorrichtung zum Steuern der Heiz- oder Klimatisierungseinrichtung und einer Anzeigevorrichtung zum Anzeigen von Zuständen der Heiz- oder Klimatisierungseinrichtung. Dabei steuert die Steuervorrichtung die Anzeigevorrichtung so an, dass verschiedene Zustände der Heiz- oder Klimatisierungseinrichtung von der Anzeigevorrichtung durch unterschiedliche Darstellungen von Fahrzeugflächen eines graphischen Objekts angezeigt werden, welches das Fahrzeug darstellt.

Aus der DE 199 41 948 A1 ist eine Anzeige- und Bedieneinheit für eine Standheizung in einem Kraftfahrzeug bekannt. Die Anzeigeeinheit ist in diesem Fall als Bordmonitor eines multifunktionalen Infotainments ausgebildet.

Bei der in der DE 10 2008 017 051 A1 vorgeschlagenen Bedieneinrichtung für eine Klimaanlage ist vorgesehen, dass eine Visualisierung der Klimaeinstellungen angezeigt wird. Dies erfolgt etwa anhand einer autostereoskopischen Darstellung des Fahrzeuginnenraums mit Pfeilsymbolen zur Anzeige der Luftströmung und anderen Symbolen sowie einer Anzeige der eingestellten Temperaturwerte.

Der vorliegenden Erfindung liegt die Aufgabe zugrunde, ein Verfahren und eine Heiz- oder Klimatisierungseinrichtung der eingangs genannten Art anzugeben, bei denen der Nutzer auf einfache und intuitive Weise erfassen kann, wie der Zustand der Heiz- oder Klimatisierungseinrichtung ist.

Erfindungsgemäß wird diese Aufgabe durch ein Verfahren mit den Merkmalen des Anspruchs 1 und eine Heiz- oder Klimatisierungseinrichtung mit den Merkmalen des Anspruchs 9 gelöst. Vorteilhafte Ausgestaltungen und Weiterbildungen ergeben sich aus den abhängigen Ansprüchen.

Das erfindungsgemäße Verfahren ist dadurch gekennzeichnet, dass verschiedene Zustände der Heiz- oder Klimatisierungseinrichtung von der Anzeigevorrichtung durch unterschiedliche Darstellungen von Fahrzeugscheiben angezeigt werden. Gemäß der Erfindung ist die Heiz- oder Klimatisierungseinrichtung eine Einrichtung zur Standklimatisierung.

Bei dem erfindungsgemäßen Verfahren kann der Nutzer vorteilhafterweise sehr einfach und intuitiv den Zustand der Heiz- oder Klimatisierungseinrichtung erfassen, da dieser Zustand mittels Darstellungen von Fahrzeugflächen eines graphischen Objekts angezeigt wird, welches das Fahrzeug selbst darstellt.

Bei dem erfindungsgemäßen Verfahren werden verschiedene Zustände der Heiz- oder Klimatisierungseinrichtung von der Anzeigevorrichtung durch unterschiedliche Darstellungen von Fahrzeugscheiben, insbesondere durch Darstellungen von Fahrzeugscheiben in unterschiedlichen Farben, angezeigt. Hierdurch ist es vorteilhafterweise sehr einfach und intuitiv möglich, den erfassten Zustand der Heiz- oder Klimatisierungseinrichtung zu erfassen.

Die Zustände der Heiz- oder Klimatisierungseinrichtung können den Zustand einer eingeschalteten Heiz- oder Klimatisierungseinrichtung, den Zustand einer ausgeschalteten Heiz- oder Klimatisierungseinrichtung und/oder den Zustand einer Heiz- oder Klimatisierungseinrichtung umfassen, die ausgeschaltet ist, die jedoch programmiert ist, sich zu einem späteren Zeitpunkt automatisch einzuschalten. Ferner können die Zustände der Heiz- oder Klimatisierungseinrichtung den Zustand einer Heiz- oder Klimatisierungseinrichtung umfassen, die ausgeschaltet ist, die jedoch drahtlos Signale zum Einschalten empfangen kann.

Bei der erfindungsgemäßen Heiz- oder Klimatisierungseinrichtung steuert die Steuervorrichtung die Anzeigevorrichtung so an, dass verschiedene Zustände der Heiz- oder Klimatisierungseinrichtung von der Anzeigevorrichtung durch unterschiedliche Darstellungen von Fahrzeugflächen eines graphischen Objekts angezeigt werden, welches das Fahrzeug darstellt. Die Steuerung der Heiz- oder Klimatisierungseinrichtung und der Anzeigevorrichtung kann dabei von einer einzigen Steuervorrichtung durchgeführt werden oder von mehreren Steuereinheiten, welche in diesem Fall die Steuervorrichtung darstellen.

Die erfindungsgemäße Heiz- oder Klimatisierungseinrichtung ist dadurch gekennzeichnet, dass die Steuervorrichtung die Anzeigevorrichtung so ansteuert, dass verschiedene Zustände der Heiz- oder Klimatisierungseinrichtung von der Anzeigevorrichtung durch unterschiedliche Darstellungen von Fahrzeugscheiben angezeigt werden. Erfindungsgemäß ist die Heiz- oder Klimatisierungseinrichtung als Standklimatisierung oder Standheizung des Fahrzeuges ausgebildet.

Die erfindungsgemäße Heiz- oder Klimatisierungseinrichtung ist ausgebildet, das erfindungsgemäße Verfahren auszuführen. Es weist somit dieselben Vorteile wie das Verfahren auf.

Die Anzeigeeinrichtung der erfindungsgemäßen Heiz- oder Klimatisierungseinrichtung kann als Anzeigeeinrichtung eines mobilen Gerätes, beispielsweise eines Mobilfunkgerätes oder einer Fernbedienung, ausgebildet sein, so dass eine die Heiz- oder Klimatisierungseinrichtung fern bediendende oder programmierende Person sich schnell einen Überblick über den aktuellen Zustand der Heiz- oder Klimatisierungseinrichtung verschaffen kann.

Ferner wird erfindungsgemäß ein Fahrzeug, insbesondere ein Kraftfahrzeug, mit der vorstehend beschriebenen Heiz- oder Klimatisierungseinrichtung bereitgestellt.

Die Erfindung wird nun anhand eines Ausführungsbeispiels mit Bezug zu den Zeichnungen erläutert.
- Figur 1: zeigt schematisch ein Fahrzeug mit einem Ausführungsbeispiel der erfindungsgemäßen Heiz- oder Klimatisierungseinrichtung, welche als Standklimatisierungssystem oder Standheizungssystem ausgebildet ist,
- Figur 2: zeigt den Aufbau des Ausführungsbeispiels der erfindungsgemäßen Heiz- oder Klimatisierungseinrichtung, welche als Standklimatisierungssystem oder Standheizungssystem ausgebildet ist,
- Figuren 3 und 4: zeigen Anzeigen, welche von einem Ausführungsbeispiel des erfindungsgemäßen Verfahrens erzeugt wurden.

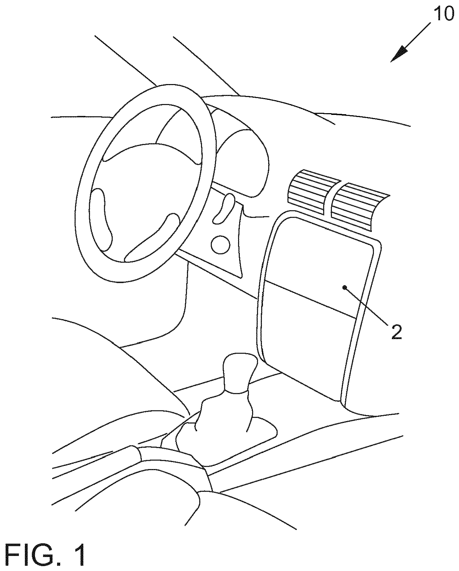

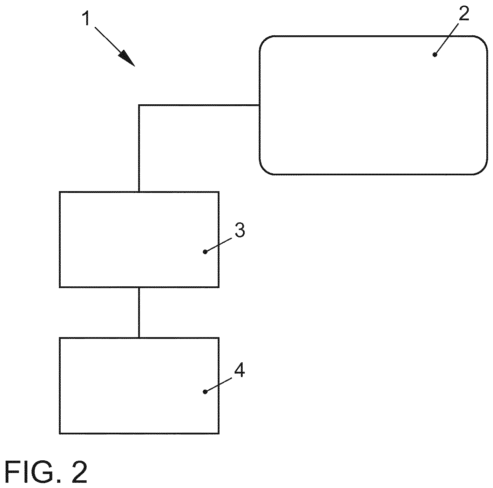

Mit Bezug zu den Figuren 1 und 2 wird das Ausführungsbeispiel des erfindungsgemäßen Standklimatisierungssystems oder Standheizungssystems 1 beschrieben:
Das Standklimatisierungssystem oder Standheizungssystem 1 ist in ein Fahrzeug 10 integriert. Es umfasst eine Anzeigevorrichtung 2, die ein Fahrzeuginsasse aus dem Innenraum des Fahrzeugs 10 heraus betrachten kann. Beispielsweise ist die Anzeigevorrichtung 2 in der Mittelkonsole des Fahrzeugs 10 untergebracht. Eine weitere Möglichkeit besteht darin, dass die Anzeigeeinrichtung 2 die Anzeige eines mobilen Gerätes ist, wobei hier die Möglichkeit besteht dass der Zustand des Standklimatisierungssystem oder Standheizungssystem auch außerhalb des Fahrzeuges festgestellt werden kann.

Die Anzeigevorrichtung 2 ist mit einer Steuervorrichtung 3 gekoppelt. Dies kann je nach Ausbildung des erfindungsgemäßen Standklimatisierungssystems oder Standheizungssystems 1 festverdrahtet oder über eine drahtlose Kommunikationsstrecke erfolgen. Die Steuervorrichtung 3 erzeugt Graphikdaten für die Anzeige auf einer Anzeigefläche der Anzeigevorrichtung 2. Ferner ist die Steuervorrichtung 3 mit einem an sich bekannten Standklimatisierungssystems oder Standheizungssystems 4 des Fahrzeugs 10 gekoppelt. Mittels dem Standklimatisierungssystem oder Standheizungssystem 4 kann der Innenraum des Fahrzeugs 10 geheizt oder belüftet bzw. gekühlt werden. Mittels der Steuervorrichtung 3 ist es außerdem möglich die Zeiten, zu denen der Innenraum des Fahrzeugs 10 geheizt oder gekühlt werden soll, im Voraus zu programmieren. Die Standklimatisierungssystems oder Standheizungssystem 4 schaltet sich dann zu den programmierten Zeiten an und wieder aus.

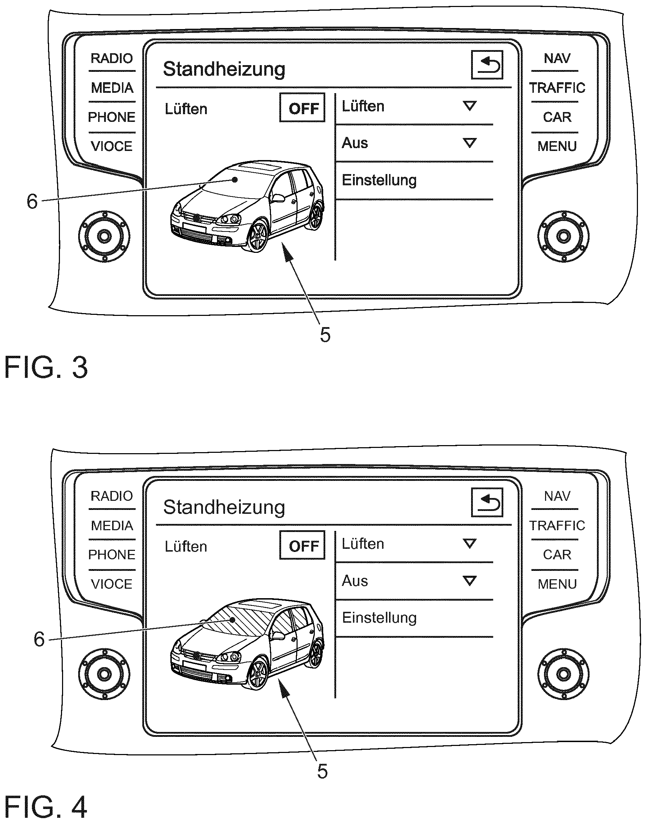

Für die Steuerung und Programmierung des Standklimatisierungssystems oder Standheizungssystems 4 stellt die Steuervorrichtung 3 über die Anzeigevorrichtung 2 eine graphische Nutzerschnittstelle bereit. Mittels dieser graphischen Nutzerschnittstelle kann ein Nutzer über an sich bekannte Eingabemittel, wie beispielsweise eine berührungsempfindliche Oberfläche auf der Anzeigefläche der Anzeigevorrichtung 2 oder über ein abgesetztes mechanisches Bedienelement, das Standklimatisierungssystem oder Standheizungssystem 4 an- und ausschalten sowie das Standklimatisierungssystems oder Standheizungssystem 4 programmieren. Der Zustand des Standklimatisierungssystems oder Standheizungssystem 4 wird dabei von der Anzeigevorrichtung 2 angezeigt, wie es im Folgenden anhand eines Ausführungsbeispiels des erfindungsgemäßen Verfahrens mit Bezug zu den Fig. 3 und 4 erläutert wird:
Für die Anzeige des Zustands des Standklimatisierungssystems oder Standheizungssystems 4 erzeugt die Steuervorrichtung 3 Graphikdaten für eine Anzeige auf der Anzeigefläche der Anzeigevorrichtung 2, bei welcher ein graphisches Objekt 5 angezeigt wird, welches das Fahrzeug darstellt. Des Weiteren erfasst beispielsweise die Steuervorrichtung 3 den Zustand des Standklimatisierungssystems oder Standheizungssystems 4. Anschließend werden mittels der Steuervorrichtung 3 und der Anzeigevorrichtung 2 verschiedene Zustände des Standklimatisierungssystems oder Standheizungssystems 4 durch unterschiedliche Darstellungen von Fahrzeugflächen angezeigt. Bei den Fahrzeugflächen handelt es sich im vorliegenden Ausführungsbeispiel um die Fahrzeugscheiben 6.

Wenn die Steuervorrichtung 3 erfasst hat, dass das Standklimatisierungssystem oder Standheizungssystem 4 ausgeschaltet ist, und auch keine Programmierung vorliegt, nach der sich das Standklimatisierungssystem oder Standheizungssystem zu einem späteren Zeitpunkt automatisch einschaltet, werden die Fahrzeugscheiben 6 bei dem graphischen Objekt 5 in Blau dargestellt. Dies ist in Figur 3 gezeigt. Weist das Standklimatisierungssystem oder Standheizungssystem eine Belüftungs- oder Kühlfunktion auf, kann auf diesem Wege auch die eingeschaltete oder programmierte Belüftungs- oder Kühlfunktion dargestellt werden.

Wird hingegen von der Steuervorrichtung 3 erfasst, dass das Standklimatisierungssystem oder Standheizungssystem 4 so programmiert wurde, dass sie sich zu einem späteren Zeitpunkt automatisch einschaltet, werden die Fahrzeugscheiben 6 des graphischen Objekts 5 des Fahrzeugs 10 in Rot dargestellt. Dies ist in Figur 4 durch eine Schraffur dargestellt. Der Nutzer kann auf diese Weise schnell und intuitiv erkennen, dass die Standheizung derzeit zwar ausgeschaltet ist, sie jedoch programmiert wurde, sich zu einem späteren Zeitpunkt automatisch einzuschalten.

Des Weiteren ist es möglich, noch weitere Zustände des Standklimatisierungssystem oder Standheizungssystem 4 durch weitere Farben oder Farbschattierungen darzustellen. Beispielsweise können die Fahrzeugscheiben 6 des graphischen Objekts 5 in Dunkelrot eingefärbt sein, wenn das Standklimatisierungssystem oder Standheizungssystem 4 momentan eingeschaltet ist. Die Fahrzeugscheiben 6 des graphischen Objekts 5 können beispielsweise Orange eingefärbt sein, wenn das Standklimatisierungssystem oder Standheizungssystem 4 zwar ausgeschaltet ist, jedoch drahtlos Signale zum Einschalten empfangen kann. In diesem Fall befindet sich das Standklimatisierungssystem oder Standheizungssystem 4 in einem Ruhezustand, bei dem sie jedoch durch den Empfang eines Funksignals eingeschaltet werden kann. Auch diesen Zustand kann der Nutzer schnell und intuitiv durch die Einfärbung der Fahrzeugscheiben 6 erfassen.

Die drahtlosen Signale, mittels welchen das Standklimatisierungssystem oder Standheizungssystem 4 eingeschaltet werden kann, können beispielsweise Funksignale sein, die über ein Mobilfunknetz an eine Mobilfunkschnittstelle des Fahrzeugs 10 übertragen werden. Ferner können die Funksignale über ein drahtloses Netz, wie ein WLAN, übertragen werden.

### Bezugszeichenliste

- 1: Standklimatisierungssystem oder Standheizungssystem
- 2: Anzeigevorrichtung
- 3: Steuervorrichtung
- 4: Heiz- oder Klimatisierungseinrichtung
- 5: graphisches Objekt
- 6: Fahrzeugflächen, Fahrzeugscheiben
- 10: Fahrzeug

## Patentansprüche

1. Verfahren zum Anzeigen des Zustands einer Heiz- oder Klimatisierungseinrichtung (4) eines Fahrzeugs (10), bei dem
- von einer Anzeigevorrichtung (2) des Fahrzeugs (10) ein graphisches Objekt (5) angezeigt wird, welches das Fahrzeug (10) darstellt,
- der Zustand der Heiz- oder Klimatisierungseinrichtung (4) erfasst wird und
- verschiedene Zustände der Heiz- oder Klimatisierungseinrichtung (4) von der Anzeigevorrichtung (2) durch unterschiedliche Darstellungen von Fahrzeugflächen (6) angezeigt werden,
**dadurch gekennzeichnet,**
**dass** verschiedene Zustände der Heiz- oder Klimatisierungseinrichtung (4) von der Anzeigevorrichtung (2) durch unterschiedliche Darstellungen von Fahrzeugscheiben (6) angezeigt werden und
**dass** die Heiz- oder Klimatisierungseinrichtung eine Standklimatisierungseinrichtung des Fahrzeuges ist.

2. Verfahren nach Anspruch 1, **dadurch gekennzeichnet,**
**dass** verschiedene Zustände der Heiz- oder Klimatisierungseinrichtung (4) von der Anzeigevorrichtung (2) durch Darstellungen von Fahrzeugscheiben (6) in unterschiedlichen Farben angezeigt werden.

3. Verfahren nach einem der vorhergehenden Ansprüche,
**dadurch gekennzeichnet,**
**dass** die Zustände der Heiz- oder Klimatisierungseinrichtung (4) den Zustand einer eingeschalteten Heiz- oder Klimatisierungseinrichtung (4) umfassen.

4. Verfahren nach einem der vorhergehenden Ansprüche,
**dadurch gekennzeichnet,**
**dass** die Zustände der Heiz- oder Klimatisierungseinrichtung (4) den Zustand einer ausgeschalteten Heiz- oder Klimatisierungseinrichtung (4) umfassen.

5. Verfahren nach einem der vorhergehenden Ansprüche,
**dadurch gekennzeichnet,**
**dass** die Zustände der Heiz- oder Klimatisierungseinrichtung (4) den Zustand einer Heiz- oder Klimatisierungseinrichtung (4) umfassen, die ausgeschaltet ist, die jedoch programmiert ist, sich zu einem späteren Zeitpunkt automatisch einzuschalten.

6. Verfahren nach einem der vorhergehenden Ansprüche,
**dadurch gekennzeichnet,**
**dass** die Zustände der Heiz- oder Klimatisierungseinrichtung (4) den Zustand einer Heiz- oder Klimatisierungseinrichtung (4) umfassen, die ausgeschaltet ist, die jedoch drahtlos Signale zum Einschalten empfangen kann.

7. Heiz- oder Klimatisierungseinrichtung für ein Fahrzeug (10) mit einer Steuervorrichtung (3) zum Steuern der Heiz- oder Klimatisierungseinrichtung (4) und einer Anzeigevorrichtung (2) zum Anzeigen von Zuständen der Heiz- oder Klimatisierungseinrichtung (4), wobei
die Steuervorrichtung (3) die Anzeigevorrichtung (2) so ansteuert, dass verschiedene Zustände der Heiz- oder Klimatisierungseinrichtung (4) von der Anzeigevorrichtung (2) durch unterschiedliche Darstellungen von Fahrzeugflächen (6) eines graphischen Objekts (5) angezeigt werden, welches das Fahrzeug (10) darstellt,**dadurch gekennzeichnet, dass** die Steuervorrichtung (3) die Anzeigevorrichtung (2) so ansteuert, dass verschiedene Zustände der Heiz- oder Klimatisierungseinrichtung (4) von der Anzeigevorrichtung (2) durch unterschiedliche Darstellungen von Fahrzeugscheiben (6) angezeigt werden und die Heiz- oder Klimatisierungseinrichtung (4) eine Standheizung des Fahrzeugs ist.

8. Heiz- oder Klimatisierungseinrichtung nach Anspruch 7, **dadurch gekennzeichnet, dass** die Steuervorrichtung (3) die Anzeigeeinrichtung (2) so ansteuert, dass verschiedene Zustände der Heiz- oder Klimatisierungseinrichtung (4) von der Anzeigevorrichtung (2) durch Darstellungen von Fahrzeugscheiben (6) in unterschiedlichen Farben angezeigt werden.

9. Heiz- oder Klimatisierungseinrichtung nach einem der Ansprüche 7 oder 8, **dadurch gekennzeichnet, dass** die Anzeigeeinrichtung (2) eine Anzeigeeinrichtung eines mobilen Gerätes ist.

10. Fahrzeug (10) mit einer Heiz- oder Klimatisierungseinrichtung (1) nach einem der Ansprüche 7 bis 9.

## Claims

1. A method for displaying the status of a heating or air conditioning device (4) of a vehicle (10), in which
- a graphical object (5) which depicts the vehicle (10) is displayed by a display device (2) of the vehicle (10,
- the status of the heating or air conditioning device (4) is detected and
- different statuses of the heating or air conditioning device (4) are displayed by the display device (2) by means of different depictions of the vehicle surfaces (6), **characterized in**
**that** different statuses of the heating or air conditioning device (4) are displayed by the display device (2) by means of different depictions of vehicle window panes (6) and
**that** the heating or air conditioning device is an auxiliary air conditioning device of the vehicle.

2. The method according to Claim 1,
**characterized in**
**that** different statuses of the heating or air conditioning device (4) are displayed by the display device (2) by means of depictions of vehicle window panes (6) in different colors.

3. The method according to any one of the preceding claims,
**characterized in**
**that** the statuses of the heating or air conditioning device (4) comprise the status of a switched-on heating or air conditioning device (4).

4. The method according to any one of the preceding claims,
**characterized in**
**that** the statuses of the heating or air conditioning device (4) comprise the status of a switched-off heating or air conditioning device (4).

5. The method according to any one of the preceding claims,
**characterized in**
**that** the statuses of the heating or air conditioning device (4) comprise the status of a heating or air conditioning device (4), which is switched off, which, but which is programmed, to switch on automatically at a later point in time.

6. The method according to any one of the preceding claims,
**characterized in**
**that** the statuses of the heating or air conditioning device (4) comprise the status of a heating or air conditioning device (4), which is switched off, but which can receive signals wirelessly to switch on.

7. A heating or air conditioning device for a vehicle (10) with a control device (3) for controlling the heating or air conditioning device (4) and a display device (2) for displaying the statuses of the heating or air conditioning device (4), wherein
the control device (3) controls the display device (2), such that different statuses of the heating or air conditioning device (4) are displayed by the display device (2) by means of different depictions of vehicle surfaces (6) of a graphical object (5), which depicts the vehicle (10), **characterized in that** the control device (3) controls the display device (2) such that different statuses of the heating or air conditioning device (4) are displayed by the display device (2) by means of different depictions of vehicle window panes (6) and the heating or air conditioning device (4) is an auxiliary heater of the vehicle.

8. The heating or air conditioning device according to Claim 7, **characterized in that** the control device (3) controls the display device (2) such that different statuses of the heating or air conditioning device (4) are displayed by the display device (2) by means of depictions of vehicle window panes (6) in different colors.

9. The heating or air conditioning device according to any one of Claims 7 or 8, **characterized in that** the display device (2) is a display device of a mobile device.

10. The vehicle (10) having a heating or air conditioning device (1) according to any one of Claims 7 to 9.

## Revendications

1. Procédé d'affichage de l'état d'un dispositif de chauffage ou de climatisation (4) d'un véhicule (10), dans lequel
- un dispositif d'affichage (2) du véhicule (10) affiche un objet graphique (5) qui représente le véhicule (10),
- l'état du dispositif de chauffage ou de climatisation (4) est détecté et
- différents états du dispositif de chauffage ou de climatisation (4) sont affichés par le dispositif d'affichage (2) par différentes représentations de surfaces du véhicule (6),
**caractérisé en ce que**
différents états du dispositif de chauffage ou de climatisation (4) sont affichés par le dispositif d'affichage (2) par différentes représentations de vitres du véhicule (6) et
le dispositif de chauffage ou de climatisation est un dispositif de climatisation à l'arrêt.

2. Procédé selon la revendication 1,
**caractérisé en ce que**
différents états du dispositif de chauffage ou de climatisation (4) sont affichés par le dispositif d'affichage (2) par différentes représentations de vitres du véhicule (6) dans des couleurs différentes.

3. Procédé selon l'une des revendications précédentes,
**caractérisé en ce que**
les états du dispositif de chauffage ou de climatisation (4) comprennent l'état d'un dispositif de chauffage ou de climatisation (4) activé.

4. Procédé selon l'une des revendications précédentes,
**caractérisé en ce que**
les états du dispositif de chauffage ou de climatisation (4) comprennent l'état d'un dispositif de chauffage ou de climatisation (4) désactivé.

5. Procédé selon l'une des revendications précédentes,
**caractérisé en ce que**
les états du dispositif de chauffage ou de climatisation (4) comprennent l'état d'un dispositif de chauffage ou de climatisation (4) qui est désactivé mais qui est programmé pour s'activer automatiquement à un moment ultérieur.

6. Procédé selon l'une des revendications précédentes,
**caractérisé en ce que**
les états du dispositif de chauffage ou de climatisation (4) comprennent l'état d'un dispositif de chauffage ou de climatisation (4) qui est désactivé mais qui peut recevoir sans fil des signaux d'activation.

7. Dispositif de chauffage ou de climatisation pour un véhicule (10) avec un dispositif de commande (3) pour le contrôle du dispositif de chauffage ou de climatisation (4) et d'un dispositif d'affichage (2) pour l'affichage d'état du dispositif de chauffage ou de climatisation (4),
le dispositif de commande (3) contrôlant le dispositif d'affichage (2) de façon à ce que différents états du dispositif de chauffage ou de climatisation (4) soient affichés par le dispositif d'affichage (2) par différentes représentations de surfaces du véhicule (6) d'un objet graphique (5), qui représente le véhicule (10), **caractérisé en ce que** le dispositif de commande (3) contrôle le dispositif d'affichage (2) de façon à ce que différents états du dispositif de chauffage ou de climatisation (4) soient affichés par le dispositif d'affichage (2) par différentes représentations de vitres du véhicule (6) et le dispositif de chauffage ou de climatisation (4) est un chauffage à l'arrêt du véhicule.

8. Dispositif de chauffage ou de climatisation selon la revendication 7, **caractérisé en ce que** le dispositif de commande (3) contrôle le dispositif d'affichage (2) de façon à ce que différents états du dispositif de chauffage ou de climatisation (4) soient affichés par le dispositif d'affichage (2) par des représentations de vitres du véhicule (6) dans des couleurs différentes.

9. Dispositif de chauffage ou de climatisation selon l'une des revendications 7 ou 8, **caractérisé en ce que** le dispositif d'affichage (2) est un dispositif d'affichage d'un appareil mobile.

10. Véhicule (10) avec un dispositif de chauffage ou de climatisation (1) selon l'une des revendications 7 à 9.
